# EUROPÄISCHE PATENTANMELDUNG

(11) **EP 4 095 424 A1**
(43) Veröffentlichungstag der Anmeldung: **30.11.2022**
(21) Anmeldenummer: 22175010.2
(22) Anmeldetag: 24.05.2022
(51) Int. Cl.: F16L 39/00

(54) **VENTILADAPTER**

(30) Priorität: 26.05.2021 DE 102021113617
(71) Anmelder: m-tech GmbH, 74670 Forchtenberg (DE)
(72) Erfinder: ENDER, Christoph, 74670 Forchtenberg (DE); HERTWECK, Gerwin, 74635 Kupferzell (DE); KÖNIG, Christian, 74679 Weißbach (DE); MÜLLER, Martin, 74613 Michelbach, Öhringen (DE); RIVEROS, Carlos, 74653 Künzelsau (DE)
(74) Vertreter: Lenzing Gerber Stute

(57) **Zusammenfassung**

Adaptereinheit (AE) zur Verbindung eines Ventils (11) mit zwei auf einer Ventilseite nebeneinander angeordneten Ventilanschlüssen (Va, Vb) mit den Leitungsenden (20a, 20b) einer Leitung (20), wobei die Adaptereinheit (AE) zumindest ein Adapterelement (12a, 12b) aufweist, wobei die Adaptereinheit zwei ventilseitige Anschlüsse (13a, 13b) zur Verbindung mit den Ventilanschlüssen (Va, Vb) und zwei leitungsseitige Anschlüsse (14a, 14b) zur Verbindung mit den Leitungsenden (20a, 20b) aufweist, wobei die beiden ventilseitigen Anschlüsse (13a, 13b) über innerhalb des mindestens einen Adapterelementes (12a, 12b) verlaufende Kanäle (16a) mit den leitungsseitigen Anschlüssen (14a, 14b) in Verbindung sind, dadurch gekennzeichnet, dass die leitungsseitigen Anschlüsse (14a, 14b) voneinander wegweisen und auf einer Achse (AX) liegen.

## Beschreibung

Die vorliegende Erfindung betrifft eine Adaptereinheit zur Verbindung eines Ventils mit zwei auf einer Ventilseite nebeneinander angeordneten Ventilanschlüssen mit den Leitungsenden einer Leitung, wobei die Adaptereinheit zumindest ein Adapterelement aufweist, wobei die Adaptereinheit zwei ventilseitige Anschlüsse zur Verbindung mit den Ventilanschlüssen und zwei leitungsseitige Anschlüsse zur Verbindung mit den Leitungsenden aufweist, wobei die beiden ventilseitigen Anschlüsse über innerhalb des mindestens einen Adapterelementes verlaufende Kanäle mit den leitungsseitigen Anschlüssen in Verbindung sind.

Ventile zur Kontrolle und Steuerungen von Fluidströmungen finden in zahlreichen Gebieten von Industrie und Wissenschaft breite Anwendung. Entsprechend gibt es eine Vielzahl unterschiedlichster Ausgestaltungen von Ventilen zur Steuerung von Flüssigkeiten und/oder Gasen. Die Bandbreite der verfügbaren Ventile reicht von einfachsten Ventilen, beispielsweise für die Steuerung eines Wasserstroms, bis hin zu Feinventilen in Ultra-Hoch-Vakuumanlagen die selbst auf molekularer Ebene dicht gegenüber extremen Druckgradienten sein müssen.

Wie die meisten Geräte unterliegen Ventile grundsätzlich einer Alterung und müssen somit irgendwann ausgetauscht werden. Da es sich bei Ventilen in der Regel um mechanische Bauteile handelt, ist die Lebensdauer eines Ventils mitunter geringer als die der angeschlossenen Leitungen. Dabei kann die Situation eintreten, dass das ursprüngliche Ventil nicht mehr verfügbar ist und durch ein anderes Modell ersetzt werden muss. Es kann auch vorkommen, dass ein Ventil auf Grund ungenügender Leistung durch ein besseres und/oder neueres Modell ersetzt werden soll. Das neue Ventil kann jedoch einen anderen Anschluss und/oder eine andere Orientierung der Anschlüsse haben als das auszutauschende Ventil. In diesem Fall können je nach verwendetem Ventil Adapterelemente dazu dienen, ein Ventil in ein bestehendes System von Leitungen einzufügen.

Von der Firma m-tech GmbH sind beispielsweise die Ventile MPG 12 NC und NO verfügbar. Bei diesen Ventilen handelt es sich um fernsteuerbare 2/2-Wege Ventile für Gase wie z.B. O₂, CO₂, Luft oder Edelgase. Durch Anlegen einer Steuerluft gegen die Federkraft eines Schließmechanismus kann das Ventil geöffnet bzw. geschlossen werden. Zum Anschluss einer Leitung an das Ventil sind Adapterelemente vorgesehen, die an eine Außenseite des Ventilgehäuses angeschraubt werden. Dabei dient je ein Adapterelement zur Verbindung von genau einem Leitungsende mit je einem Ventilanschluss des Ventils. In der Standardkonfiguration sind somit zwei Adapterelemente, jeweils eins für Zu- und Abfluss, nötig, um das Ventil mit einer Leitung bzw. den Leitungsenden einer Leitung zu verbinden.

Die Gehäuse der Ventile MPG 12 NC und NO haben eine kastenförmige Grundform mit zwei quadratischen Stirnflächen und vier im Wesentlichen gleich große Seitenflächen. An jeder Seitenfläche können an zwei Adapterpositionen zwei Adapterelemente angeschraubt werden, so dass sich Zu- und Abfluss an derselben Gehäuseseite befinden. Das Ventil kann aber bei Bedarf auch so konfiguriert werden, dass jedes Adapterelement an jede andere Seitenfläche angeschraubt werden kann. Auf diese Weise können sich Zu- und Abfluss beispielsweise auch gegenüberliegen. Selbstverständlich kann auch eine rechtwinklige Orientierung zwischen Zu- und Abfluss realisiert werden. Auf diese Weise kann das beschriebene Ventil an die individuellen Gegebenheiten eines vorhandenen Leitungssystems angepasst werden.

Ein Nachteil der derzeit am Markt verfügbaren Ventile besteht mitunter darin, wenn das neue Ventil größer ist als das zu ersetzende Ventil. Demzufolge kann es problematisch oder unmöglich sein, ein neues Ventil ohne weitere Modifikationen in ein bestehendes Leitungssystem einzubauen, da die bestehenden Leitungsenden zu dicht beieinanderliegen und nicht genügend Platz für das neue Ventil zur Verfügung steht. Somit werden gegebenenfalls teure Sonderanfertigungen oder Neuentwicklungen benötigt. Je nach Einsatzgebiet werden zudem Zertifikate benötigt, um für etwaige Sonderanfertigungen oder Neuentwicklungen einsetzen zu dürfen. Dies ist beispielsweise in der Lebensmittelindustrie regelmäßig der Fall. Daher ist man bestrebt, den Einsatzbereich bekannter und gegebenenfalls bereits zertifizierter Ventile möglichst breit zu gestalten.

Die Aufgabe der vorliegenden Erfindung besteht somit darin, das Einsatzgebiet von bestimmten bereits existierenden Ventilen zu erweitern, derart, dass diese an individuelle Gegebenheiten anpassbar sein. Insbesondere sollen vorhandene Ventile durch größere Ventile ersetzbar sein, derart, dass Modifikationen am Ventil und/oder dem vorhandenen Leitungssystem gar nicht oder wenn überhaupt nur in geringem Maße notwendig sind.

Diese Aufgabe wird erfinderisch durch eine Adaptereinheit mit den Merkmalen des Anspruchs 1 dadurch gelöst, dass die leitungsseitigen Anschlüsse voneinander wegweisen und auf einer Achse liegen. Weitere vorteilhafte Ausgestaltungen der erfindungsgemäßen Adaptereinheit finden sich in den Unteransprüchen.

Die erfindungsgemäße Adaptereinheit dient der Verbindung eines Ventils mit zwei auf einer Ventilseite nebeneinander angeordneten Ventilanschlüssen mit den Leitungsenden einer Leitung. Die Adaptereinheit weist zumindest ein Adapterelement und zwei ventilseitige Anschlüsse auf, um die Adaptereinheit an die zwei nebeneinander angeordneten Anschlüsse des Ventils anzuschließen. Darüber hinaus weist die Adaptereinheit zwei leitungsseitige Anschlüsse zur Verbindung mit jeweils einem Leitungsende einer Leitung auf. Jeder der zwei leitungsseitigen Anschlüsse ist mit jeweils einem ventilseitigen Anschluss verbunden. Dazu verläuft ein Kanal zwischen je einem leitungsseitigen Anschluss und einem ventilseitigen Anschluss innerhalb des mindestens einen Adapterelements.

Durch die erfindungsgemäße Adaptereinheit mit zwei voneinander wegweisenden, auf einer Achse liegenden leitungsseitigen Anschlüssen, kann ein an die Adaptereinheit angeschlossenes Ventil in eine bestehende Leitung eingebracht werden, ohne dass das Ventil selbst zwischen den Leitungsenden angeordnet sein muss. Das ist insbesondere dann vorteilhaft, wenn das Ventil für die Lücke zwischen den zwei Leitungsenden zu groß ist. Teure Sonderanfertigungen oder der Austausch des gesamten bestehenden Leitungssystems entfallen dadurch.

Vorteilhaft kann das bzw. können die Adapterelemente so ausgebildet sein, dass es bzw. sie an bereits existierende Ventile anbringbar ist/sind. Beispielsweise können die Adapterelemente die gleichen Schraubenpositionen wie die bereits existierenden Adapterelemente der m-tech Standard MPG 12 Ventile aufweisen und mithin ohne weitere Modifikation auf diese aufgeschraubt werden. Hierdurch wird der Einsatzbereich des bestehenden Ventils vorteilhaft erheblich erweitert.

In manchen Bereichen wie beispielsweise der Lebensmittelindustrie müssen Ventile zudem bestimmte Vorgaben erfüllen und für den Einsatz in diesen Bereichen mitunter zertifiziert werden, bevor sie eingesetzt werden können. Durch die Verwendung einer erfindungsgemäßen Adaptereinheit können bereits zertifizierte Ventile vorteilhaft auch dort eingesetzt werden, wo ihre Verwendung bisher aufgrund ihrer Konstruktion und/oder Abmessungen nicht möglich war. Neben den hohen Kosten für die Herstellung einer Sonderanfertigung oder die Entwicklung eines neuen Modells entfällt so vorteilhaft auch eine ansonsten notwendige kostspielige Zertifizierung.

In einer Ausführungsform der Erfindung weist das mindestens eine Adapterelement einen Befestigungsflansch zur Befestigung des Adapterelements bzw. der Adapterelemente und damit der Adaptereinheit an dem Ventil auf. Sowohl die ventilseitigen Anschlüsse als auch die Ventilanschlüsse weisen Durchtrittsöffnungen auf, wobei jeweils eine Durchtrittsöffnung eines Ventilanschlusses mit einer Durchtrittsöffnung eines ventilseitigen Anschlusses miteinander korrespondieren und im angeschlossenen bzw. befestigten Zustand übereinanderliegen, so dass ein Durchfluss eines Fluids möglich ist. Die Durchtrittsöffnungen können jeweils von mindestens einem Dichtungselement wie beispielsweise einem O-Ring umfasst sein. Ist die Adaptereinheit an dem Ventil befestigt, so sind die Dichtungselemente zwischen den jeweils korrespondierenden Anschlüssen von Ventil und Adapterelement angeordnet. Die Dichtungselemente dichten somit die zusammenwirkenden Durchtrittsöffnungen ab.

In einer bevorzugten Ausführungsform weist die Adaptereinheit genau zwei Adapterelemente auf, die nebeneinander an dem Ventil befestigbar bzw. befestigt sind. Die zwei Adapterelemente können grundsätzlich unterschiedlich oder auch baugleich ausgestaltet sein. Der Vorteil von zwei Adapterelementen gegenüber einem Adapterelement besteht darin, dass minimale Fertigungsungenauigkeiten am Ventil und/oder den Adapterelementen ausgeglichen werden können und dadurch insgesamt eine deutlich bessere Dichtigkeit erreicht werden kann. Wird nur ein einziges Adapterelement verwendet, so müssen die beiden ventilseitigen Anschlüsse und die beiden Ventilanschlüsse, um eine hohe Dichtigkeit zu erreichen, idealerweise identisch zueinander beabstandet sein, damit die Durchtrittsöffnungen möglichst perfekt übereinander liegen. Das wird in der Praxis jedoch selten oder gar nicht erreicht. Selbst wenn eine ideale Ausrichtung der korrespondierenden Durchtrittsöffnungen erreichbar wäre, so müsste die Befestigung des einen Adapterelements mit einer völlig homogenen Kräfteverteilung durchgeführt werden, was ist in der Praxis praktisch nicht möglich ist. Bei der Verwendung von zwei Adapterelementen mit jeweils einem Befestigungsflansch können Inhomogenitäten bei der Befestigung minimiert und eine vorteilhaft hohe Dichtigkeit erreicht werden.

Bei einer besonders bevorzugten Ausführungsform sind die beiden Adapterelemente identisch bzw. baugleich ausgebildet. In diesem Fall sind die beiden identischen Adapterelemente in befestigtem Zustand um 180° zueinander gedreht. Die Befestigungsflansche und Ventilanschlüsse sind bei dieser Ausführungsform so ausgebildet, dass die Befestigung der Adapterelemente an den beiden Ventilanschlüssen in antiparalleler Ausrichtung zueinander möglich ist. Dies kann beispielsweise durch rotationssymmetrisch verteilte Gewindebohrungen am Ventil und entsprechend verteilte Durchgangsbohrungen für Schrauben an den Befestigungsflanschen erfolgen. Die Verwendung von zwei baugleichen Adaptereinheiten hat den Vorteil, dass nur ein Adapterelement konstruiert, gefertigt, gekauft und gelagert werden muss. Das macht die Verwendung in der Praxis flexibler, einfacher und kostengünstiger gegenüber der Verwendung von zwei unterschiedlich ausgebildeten Adapterelementen.

Bei einer weiteren bevorzugten Ausführungsform ist jedes Adapterelement im Längsquerschnitt L-förmig ausgebildet und weist einen ersten und einen zweiten Schenkel auf. Der erste Schenkel kann länger als der zweite Schenkel ausgebildet sein und weist an seinem Ende den Befestigungsflansch zur Befestigung des Adapterelements am Ventil auf. Somit zeigt der längere erste Schenkel zum Ventil hin und der zweite kürzere Schenkel verläuft zum ersten Schenkel im Wesentlichen rechtwinklig. Jedes Adapterelement verfügt bevorzugt über genau einen ventilseitigen Anschluss am freien Ende des ersten Schenkels und genau einen leitungsseitigen Anschluss am freien Ende des zweiten Schenkels.

Der ventilseitige Anschluss ist jeweils über einen Kanal mit dem korrespondierenden leitungsseitigen Anschluss verbunden. Bei der Ausführungsform mit L-förmigem Längsquerschnitt weist der Kanal einen ersten und einen zweiten Kanalabschnitt auf, wobei der erste Kanalabschnitt im ersten Schenkel und der zweite Kanalabschnitt im zweiten Schenkel angeordnet ist. Die Kanalabschnitte können bevorzugt durch jeweils eine Bohrung im ersten bzw. im zweiten Schenkel gebildet sein, so dass jeder Kanalabschnitt eine definierte Achse aufweist.

Aus baulichen Gründen kann es sinnvoll und/oder notwendig sein, dass der erste Kanalabschnitt leicht schräg im ersten Schenkel verläuft. Schräg bedeutet in diesem Zusammenhang, dass im Längsquerschnitt ein Winkel zwischen der Flächennormalen des ventilseitigen Anschlusses und der Achse des ersten Kanalabschnitts besteht. Das kann insbesondere dann notwendig sein, wenn die Befestigungsmittel oder die Schrauben am Befestigungsflansch so angeordnet sind, dass sie nur erreichbar sind, wenn der erste Schenkel und die Durchtrittsöffnung des korrespondierenden Ventilanschlusses nicht miteinander fluchten. In diesem Fall kann die Wandstärke des ersten Schenkels bei gerade verlaufendem ersten Kanalabschnitt mitunter nicht ausreichen, um dem auftretenden Druck standzuhalten. Aus strömungsdynamischen Gründen ist es jedoch vorteilhaft, wenn der Winkel zwischen der Flächennormalen des ventilseitigen Anschlusses und der Achse des ersten Kanalabschnitts möglichst gering ist. Der Winkel beträgt vorteilhaft zwischen 0° und 30°, bevorzugt zwischen 2° und 10°.

Damit ein aus strömungsdynamischer Sicht äußerst nachteilhafter spitzer Winkel zwischen der Achse des ersten und der Achse des zweiten Kanalabschnitts vermieden wird, muss zwischen der Achse des zweiten Kanalabschnitts und der Flächennormalen des leitungsseitigen Anschlusses ebenfalls ein Winkel bestehen. Dieser Winkel kann zwischen 0° und 30°, insbesondere zwischen 5° und 20° betragen.

Zwischen den Achsen der beiden Kanalabschnitte besteht aus strömungsdynamischen Gründen vorteilhaft ein stumpfer Winkel, der zwischen 90° und 160°, insbesondere zwischen 95° und 120°, besonders bevorzugt zwischen 95° und 105° beträgt. Bei einer derartigen Ausbildung der Adaptereinheit bzw. deren Adapterelement(en) verläuft die Achse der Leitung im Wesentlichen rechtwinklig zu den Flächennormalen der Ventilanschlüsse. Durch die abgewinkelten Kanalabschnitte innerhalb der beiden Schenkel ist trotzdem eine gute Strömungsdynamik gewährleistet.

Bei einer weiteren Ausführungsform der erfindungsgemäßen Adaptereinheit sind an einer, insbesondere ventilabgewandten, Seite des Adapterelements Befestigungsmittel derart angeordnet, integriert oder angeformt, dass zwei Adapterelemente miteinander verbindbar sind. Das hat den Vorteil, dass die Adapterelemente nicht nur mittels der Befestigungsflansche an dem Ventil sondern auch aneinander befestigt sind. Dies führt zu mehr Stabilität, gleichzeitig werden aber die vorteilhaften Dichtungseigenschaften von zwei Adapterelementen gegenüber einem einzigen Adapterelement beibehalten. Die Befestigungsmittel können zusammenwirkende Schrauben und Gewindebohrungen sein. Es sind aber auch Steck-, Klemm- oder Rastverbindungen möglich.

In einer bevorzugten Ausführungsform weist die Adaptereinheit ein Verbindungselement auf, das an beiden Adapterelementen befestigbar ist. Das Verbindungselement kann beispielsweise eine Platte mit Durchgangsbohrungen sein, die mit Schrauben an die ventilabgewandten Seiten der beiden nebeneinander am Ventil angeordneten Adapterelementen geschraubt wird. Selbstverständlich sind auch andere Verbindungselemente, beispielsweise in Form von Klammern, Spangen, Schellen, Stege oder Streben denkbar.

In einer Ausführungsform der Erfindung weist der Befestigungsflansch zumindest eine Durchgangsbohrung für eine Befestigungsschraube zur Befestigung der Adaptereinheit an dem Ventil auf. Sollen die Adaptereinheiten bereits vorhandene Adapter eines vorhandenen Ventils ersetzen, liegen die Durchgangsbohrungen für die Befestigungsschrauben vorteilhaft an den gleichen Stellen wie die Durchgangsbohrungen der bereits vorhandenen Adapter. Dann fluchten die Durchgangsbohrungen der Adaptereinheiten mit den Gewindebohrungen des bereits vorhandenen Ventils. Die Befestigung der Adaptereinheit an dem Ventil ist dann besonders einfach und unkompliziert. Selbstverständlich ist es ebenso denkbar, die Adapter durch andere Befestigungsmittel an dem Ventil zu befestigen, solange die Verbindung hinreichend steif, fest und dicht für den vorgesehenen Einsatzbereich ist. Als Befestigungsmittel sind beispielsweise Klemmen, Schellen, Steck, Klemm oder Rastverbindungen denkbar.

In einer weiteren Ausführungsform weist die Adaptereinheit an den leitungsseitigen Anschlüssen Anschlussmittel auf, um die leitungsseitigen Anschlüsse mit jeweils einem Leitungsende zu verbinden. Die Anschlussmittel können beispielsweise Anschlussstutzen, Flansche, Gewinde oder Schlauchtüllen sein.

In einer bevorzugten Ausführungsform entspricht die Länge des zweiten Schenkels im Wesentlichen der Breite des Befestigungsflansches oder ist nur unwesentlich länger. Es ist besonders vorteilhaft, wenn die Länge des zweiten Schenkels in Richtung der Flächennormalen des leitungsseitigen Anschlusses nicht mehr als das 1 bis 1,2 fache der Breite des Befestigungsflansches beträgt. Das bedeutet, dass der zweite Schenkel verhältnismäßig kurz ist und folglich nicht weit in ein Leitungsende hineinragt, so dass die Verwendung in kleinen bzw. kurzen Leitungslücken erleichtert oder dadurch überhaupt erst möglich ist. Das Anschlussmittel wie beispielsweise der Anschlussstutzen liegt dann ungefähr oder exakt in der gleichen Ebene wie die Befestigungsschrauben des Befestigungsflansches des jeweiligen Adapterelements. Dadurch ist die Adaptereinheit äußerst kompakt.

In einer weiteren Ausführungsform weist jedes Adapterelement mindestens eine, bevorzugt genau eine, flache Außenseite auf. Der Befestigungsflansch kann dann auf der der ebenen Außenseite gegenüberliegenden Seite des Adapterelements hervorstehen. Der vorstehende Bereich weist dann zumindest eine Durchgangsbohrung für eine Befestigungsschraube auf. Darüber hinaus kann die Adaptereinheit in dem ersten Schenkel zumindest eine Durchgangsbohrung für eine Befestigungsschraube aufweisen, wobei die Durchgangsbohrung über die gesamte Länge des ersten Schenkels durch die Adaptereinheit verläuft und eine entsprechend lange Schraube notwendig ist, um das Adapterelement an dem Ventil so zu befestigen.

Zur Befestigung des Ventils an den Leitungsenden, können je nach vorhandenem Platz und Anschlussausbildung (Flansch, Gewinde, Schlauchtülle, etc.) zunächst die Adapterelemente an den Leitungsenden befestigt werden, wonach dann das Ventil an den ventilseitigen Anschlüssen der Adapterelemente befestigt wird. Sofern möglich, können aber auch zunächst die Adapterelemente am Ventil befestigt und danach das Ventil samt Adapterelementen in die Leitung eingebaut werden.

In einer besonders bevorzugten Ausführungsform der erfindungsgemäßen Adaptereinheit liegen zwei Adapterelemente mit ihren flachen Seiten aneinander an.

Im Folgenden wird die Erfindung anhand von Figuren, in denen eine bevorzugte Ausgestaltung der erfindungsgemäßen Adaptereinheit dargestellt ist, erläutert.

Es zeigen:
- Fig. 1: einen Längsquerschnitt durch ein 2/2-Wege Gasventil mit flachen Adapterelementen gemäß dem Stand der Technik;
- Fig. 2: eine Außenansicht eines 2/2-Wege Gasventil gemäß dem Stand der Technik;
- Fig. 3: eine Seitenansicht, teilweise im Längsquerschnitt, einer erfindungsgemäße Adaptereinheit für ein Ventil mit zwei nebeneinanderliegenden Anschlüssen, mit zwei baugleichen Adapterelementen;
- Fig. 4: eine Seitenansicht einer erfindungsgemäßen Adaptereinheit mit angeschlossenen Leitungsenden einer Leitung.

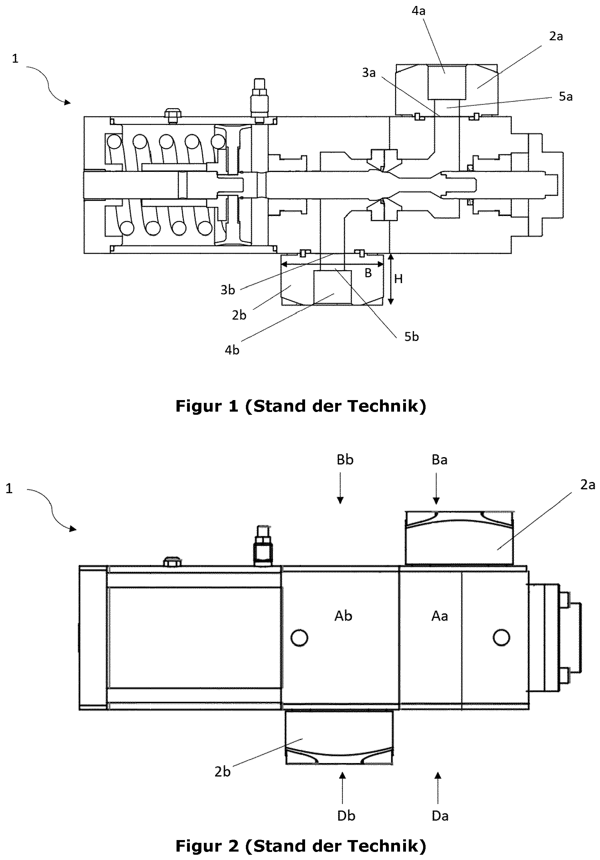

Figur 1 zeigt eine Seitenansicht eines Längsquerschnitts durch ein Ventil 1 für die Steuerung und Regulierung von Fluiden gemäß dem Stand der Technik. An zwei Außenseiten des Ventils 1 ist jeweils ein Adapterelement 2a, 2b befestigt, das zur Verbindung des Ventils 1 mit einer nicht dargestellten Leitung bzw. deren nicht dargestellten Leitungsenden dient. Eine Breite B der Adapterelemente 2a, 2b ist größer als eine Höhe H, so dass die Adapterelemente 2a, 2b im Wesentlichen flach ausgebildet sind. Die Adapterelemente 2a, 2b weisen jeweils einen ventilseitigen Anschluss 3a, 3b und einen leitungsseitigen Anschluss 4a, 4b auf, wobei die korrespondierenden Anschlüsse direkt über einen kurzen und geraden Kanal 5a, 5b miteinander verbunden sind und von der Ventilseite wegweisen.

Figur 2 zeigt das gleiche Ventil 1 in einer seitlichen Außenansicht. Die Adapter 2a, 2b sind an den gleichen Positionen wie in Fig. 1 befestigt. Die Grundform des Ventils 1 ist kastenförmig mit vier Außenseiten und zwei im Wesentlichen quadratischen Stirnseiten. Das Ventil 1 ist derart konstruiert, dass beide Adapterelemente 2a, 2b grundsätzlich an allen Ventilseiten befestigt werden können. Dafür weist jede Seite zwei äquivalente Adapteranschlusspositionen (Aa, Ab, Ba, Bb, Ca, Cb, Da, Db) auf, die prinzipiell alle Ventilanschluss dienen können. Auf diese Weise kann die Konfiguration und damit die Orientierung der Ventilanschlüsse an unterschiedliche Anforderungen angepasst werden. Das abgebildete Ventil 1 befindet sich in der Konfiguration BaDb.

Soll dieses bereits sehr flexibel einsetzbare Ventil 1 beispielsweise in eine Leitung als Zwischenventil eingesetzt werden, kommen nur die Konfigurationen wie z.B. BaDb und DaBb in Betracht, bei denen die Adapter auf gegenüberliegenden Seiten des Ventilkörpers angeordnet sind. Dabei besteht das Problem, dass die Lücke zwischen den zu verbindenden Leitungsenden hinreichend groß sein muss, um das gesamte Ventil mitsamt den Adapterelementen 2 aufzunehmen. Außerdem besteht auf diese Weise ein axialer Versatz zwischen den Ventilanschlüssen, so dass eine Verwendung mit zwei miteinander fluchtenden Leitungsenden nicht ohne Modifikation der Leitung möglich ist.

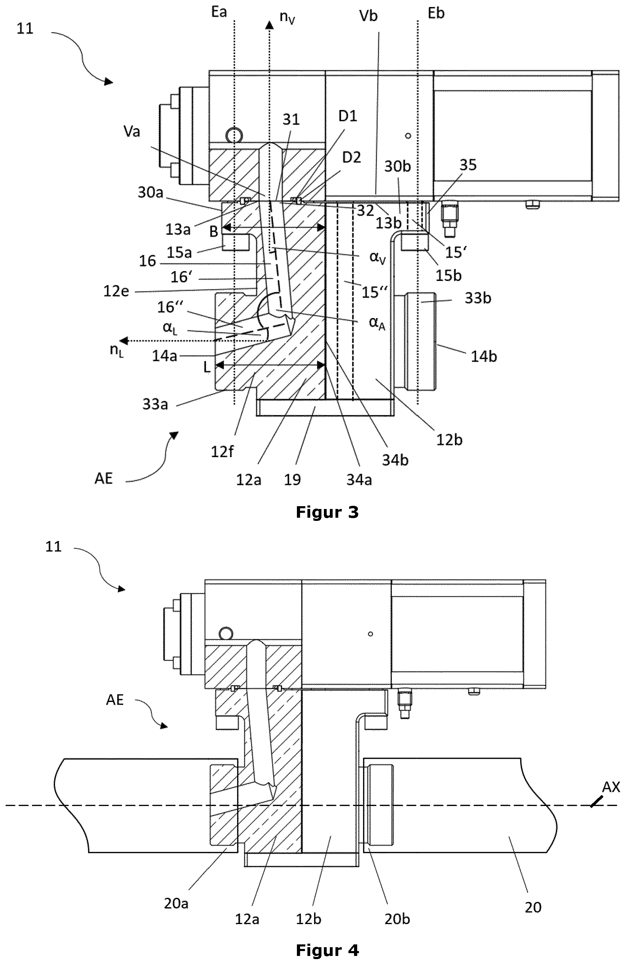

Figur 3 zeigt ein Ventil 11 mit zwei nebeneinander angeordneten Ventilanschlüssen Va, Vb mit einer erfindungsgemäßen Adaptereinheit AE mit zwei baugleichen Adapterelementen 12a, 12b. Die Adapterelemente 12a, 12b sind im Längsquerschnitt L-förmig und weisen einen ersten Schenkel 12e und einen zweiten Schenkel 12f auf, wobei der erste Schenke 12e länger ist als der zweite Schenkel 12f.

Die Adapterelemente 12a, 12b weisen jeweils einen ventilseitigen Anschluss 13a, 13b und einen leitungsseitigen Anschluss 14a, 14b auf und sind grundsätzlich an den gleichen Adapterpositionen wie die Adapterelemente 2 befestigbar. In der dargestellten Ausführungsform weisen die Adapterelemente 12a, 12b für die Befestigung an dem Ventil 11 bzw. dessen Ventilanschlüssen Va, Vb jeweils einen Befestigungsflansch 30a, 30b mit einer oder mehreren Durchgangsbohrung(en) 15' für Befestigungsschrauben 15a, 15b auf. Mindestens eine weitere mögliche Durchgangsbohrung 15" für eine nicht dargestellte Befestigungsschraube kann im ersten Schenkel 12a angeordnet sein und ist mittels der gestrichelten Linien angedeutet. Sie verläuft durch die gesamte Länge des ersten Schenkels 12e des Adapterelements 12a, 12b hindurch, so dass das Adapterelement 12a, 12b nicht nur einseitig an dem Ventil befestigbar ist.

Der ventilseitige Anschluss 13a, 13b ist über einen Kanal 16 mit dem korrespondierenden leitungsseitigen Anschluss 14a, 14b verbunden. Der Kanal 16 weist einen ersten Kanalabschnitt 16' im ersten Schenkel 12e und einen zweiten Kanalabschnitt 16" im zweiten Schenkel 12f des Adapterelements 12a, 12b auf.

Zwischen einer Achse des ersten Kanalabschnitts 16' und einer Flächennormalen n_{V} des ventilseitigen Anschlusses 13a, 13b besteht ein Winkel α_{V}. Zwischen einer Achse des zweiten Kanalabschnitts 16" und einer Flächennormalen n_{L} des leitungsseitigen Anschlusses 14a, 14b besteht ebenfalls ein Winkel α_{L}. Die beiden Winkel α_{V} und α_{L} sind so gewählt, dass ein stumpfer Winkel α_{A} zwischen der Achse des ersten Kanalabschnitts 16' und der Achse des zweiten Kanalabschnitts 16" besteht. In dem dargestellten Ausführungsbeispiel beträgt der Winkel α_{A} ungefähr 100°.

Der ventilseitige Anschluss 13a, 13b und der Ventilanschluss Va, Vb weisen jeweils eine Durchtrittsöffnung 31, 32 auf, die miteinander korrespondieren und so den Übergang zwischen Ventil 11 und dem ersten Kanalabschnitt 16' bilden. Für die Dichtung des Übergangs von Ventil 11 zum ersten Kanalabschnitt 16' sind die Durchtrittsöffnungen 31, 32 von Dichtungselementen D1, D2 umfasst.

Die Adapterelemente 12a, 12b weisen jeweils an ihrem zweiten Schenkel 12f Anschlussmittel 33a, 33b auf, um die leitungsseitigen Anschlüsse 14a, 14b mit nicht dargestellten Leitungsenden einer Leitung zu verbinden. Der zweite Schenkel 12f weist in Richtung der Flächennormalen n_{L} eine Länge L auf, die etwa das 1.05 fache einer Breite B des Befestigungsflansches 30a, 30b beträgt. Durch die Ausrichtung und die kurze Länge des zweiten Schenkels 12f liegen die Anschlussmittel 33a, 33b jeweils in einer Ebene Ea, Eb mit den Durchgangsbohrungen 15' die in einem vorstehenden Bereich 35 des Befestigungsflansches 30a, 30b angeordnet sind.

Die Adapterelemente 12a, 12b weisen jeweils eine flache Seite 34a, 34b auf und sind durch ein Verbindungselement 19 in Form einer Platte miteinander verbunden. Die Platte ist jeweils an einer ventilabgewandten Seite der Adapterelemente 12a, 12b durch nicht dargestellte Schrauben befestigt. In der dargestellten Ausführungsform liegen die beiden Adapterelemente 12a, 12b mit ihren flachen Seiten 34a, 34b aneinander an, wobei die beiden leitungsseitigen Anschlüsse 14a, 14b voneinander wegweisen.

Figur 4 zeigt die gleiche Ausführungsform der erfindungsgemäßen Adaptereinheit AE wie Figur 3, wobei die Adaptereinheit AE eine Leitung 20 mit dem Ventil 11 verbindet. Das Ventil 11 ist zu groß für die bestehende Lücke zwischen zwei Enden 20a, 20b der Leitung 20. Die beiden Adapterelemente 12a, 12b sind wie bei Figur 3 beschrieben an dem Ventil 11 angeordnet. Die leitungsseitigen Anschlüsse 14a, 14b der Adapterelemente 12a, 12b liegen auf einer Achse AX und weisen voneinander weg. Die leitungsseitigen Anschlüsse 14a, 14b liegen dicht beieinander und die zweiten Schenkel 12f ragen nur wenig in die Leitungsenden 20a, 20b hinein. Durch die in Figur 4 dargestellte Adaptereinheit AE ist es somit möglich, dass Ventil 11 in die Leitung 20 ohne weitere Modifikationen zu integrieren.

## Patentansprüche

1. Adaptereinheit (AE) zur Verbindung eines Ventils (11) mit zwei auf einer Ventilseite nebeneinander angeordneten Ventilanschlüssen (Va, Vb) mit den Leitungsenden (20a, 20b) einer Leitung (20), wobei die Adaptereinheit (AE) zumindest ein Adapterelement (12a, 12b) aufweist, wobei die Adaptereinheit zwei ventilseitige Anschlüsse (13a, 13b) zur Verbindung mit den Ventilanschlüssen (Va, Vb) und zwei leitungsseitige Anschlüsse (14a, 14b) zur Verbindung mit den Leitungsenden (20a, 20b) aufweist, wobei die beiden ventilseitigen Anschlüsse (13a, 13b) über innerhalb des mindestens einen Adapterelementes (12a, 12b) verlaufende Kanäle (16a) mit den leitungsseitigen Anschlüssen (14a, 14b) in Verbindung sind, **dadurch gekennzeichnet, dass** die leitungsseitigen Anschlüsse (14a, 14b) voneinander wegweisen und auf einer Achse (AX) liegen.

2. Adaptereinheit (AE) nach Anspruch 1, **dadurch gekennzeichnet, dass** das eine bzw. jedes Adapterelement (12a, 12b) einen Befestigungsflansch (30a, 30b) zur Befestigung an dem Ventil (11) hat, wobei die Ventilanschlüsse (Va, Vb) und die ventilseitigen Anschlüsse (13a, 13b) Durchtrittsöffnungen (31, 32) aufweisen, die jeweils von mindestens einem Dichtungselement (D1, D2) umfasst sind, welche zwischen den jeweils korrespondierenden Ventilanschlüssen (Va, Vb) und ventilseitigen Anschlüssen (13a, 13b) angeordnet sind.

3. Adaptereinheit (AE) nach Anspruch 1 oder 2, **dadurch gekennzeichnet, dass** die Adaptereinheit (AE) zwei Adapterelemente (12a, 12b) aufweist, die nebeneinander an dem Ventil (11) befestigbar bzw. befestigt sind, wobei insbesondere die beiden Adapterelemente (12a, 12b) identisch ausgebildet sind und um 180° gedreht zueinander an dem Ventil befestigbar bzw. befestigt sind.

4. Adaptereinheit (AE) nach einem der vorhergehenden Ansprüche, **dadurch gekennzeichnet, dass** jedes Adapterelement (12a, 12b) im Längsquerschnitt L-förmig ausgebildet ist, wobei ein erster Schenkel (12e) länger ausgebildet ist als ein zweiter Schenkel (12f), und dass an dem freien Ende des ersten Schenkels (12e) der Befestigungsflansch (30a, 30b) angeordnet ist und/oder jedes Adapterelement (12a, 12b) genau einen ventilseitigen Anschluss (13a, 13b) und einen leitungsseitigen Anschluss (14a, 14b) aufweist, die über den Kanal (16) miteinander verbunden sind.

5. Adaptereinheit (AE) nach Anspruch 4, **dadurch gekennzeichnet, dass** entweder der Kanal (16) einen ersten Kanalabschnitt (16') im ersten Schenkel (12e) und einen zweiten Kanalabschnitt (16") im zweiten Schenkel (12f) des Adapterelements (12a, 12b) aufweist
und/oder
der ventilseitige Anschluss (13a, 13b) am freien Ende des ersten Schenkels (12e) und der leitungsseitige Anschluss (14a, 14b) am freien Ende des zweiten Schenkels (12f) angeordnet ist.

6. Adaptereinheit nach Anspruch 4 oder 5, **dadurch gekennzeichnet, dass** der erste und der zweite Kanalabschnitt (16', 16") durch jeweils eine Bohrung im ersten Schenkel (12e) und im zweiten Schenkel (12f) mit jeweils einer Achse gebildet ist, wobei insbesondere zwischen einer Flächennormalen (n_{V}) des ventilseitigen Anschlusses (13a, 13b) und der Achse des ersten Kanalabschnitts (16') ein Winkel (α_{V}) besteht, wobei der Winkel (α_{V}) zwischen 0° und 30°, insbesondere zwischen 2° und 10°, beträgt.

7. Adaptereinheit (AE) nach Anspruch 6, **dadurch gekennzeichnet, dass** entweder zwischen einer Flächennormalen (n_{L}) des leitungsseitigen Anschlusses (14a, 14b) und der Achse des zweiten Kanalabschnitts (16") ein Winkel (α_{L}) besteht, wobei der Winkel (α_{L}) zwischen 0° und 30°, insbesondere zwischen 5° und 20°, beträgt
und/oder
zwischen den Achsen der Kanalabschnitte (16', 16") ein stumpfer Winkel (α_{A}) besteht, der zwischen 90° und 160°, insbesondere zwischen 95° und 120°, besonders bevorzugt zwischen 95° und 105°, beträgt.

8. Adaptereinheit (AE) nach einem der vorhergehenden Ansprüche, **dadurch gekennzeichnet, dass** entweder an einer, insbesondere ventilabgewandten, Seite des Adapterelements (12a, 12b) Befestigungsmittel, insbesondere in Form von Schrauben und Gewindebohrungen, derart angeordnet, integriert oder angeformt sind, dass zwei Adapterelemente (12a, 12b), miteinander verbindbar sind,
und/oder zumindest ein Verbindungselement (19), insbesondere in Form einer Platte, an zwei Adapterelementen (12a, 12b) derart befestigbar ist, dass das Verbindungselement (19) die Adapterelemente (12a, 12b) miteinander verbindet.

9. Adaptereinheit (AE) nach einem der vorhergehenden Ansprüche, **dadurch gekennzeichnet, dass** entweder der Befestigungsflansch (30a, 30b) zumindest eine Durchgangsbohrung (15', 15") für eine Befestigungsschraube (15a, 15b) zur Befestigung der Adaptereinheit (AE) an dem Ventil (11) aufweist
und/oder
Anschlussmittel (33a, 33b), insbesondere in Form von Anschlussstutzen, Flanschen, Gewinden oder Schlauchtüllen, vorgesehen sind, um die leitungsseitigen Anschlüsse (14a, 14b) mit jeweils einem Leitungsende (20a, 20b) der Leitung (20) zu verbinden.

10. Adaptereinheit (AE) nach einem der Ansprüche 4 bis 9, **dadurch gekennzeichnet, dass** entweder die Länge (L) des zweiten Schenkels (12f) in Richtung einer Flächennormalen (n_{L}) nicht mehr als das 1 bis 1,2 fache der Breite (B) des Befestigungsflansches (30a, 30b) beträgt
und/oder
die Anschlussmittel (33a, 33b) in einer gleichen Ebene (Ea, Eb) wie die Befestigungsschraube (15a, 15b) des jeweiligen Adapterelements (12a, 12b) liegen.

11. Adaptereinheit (AE) nach einem der Ansprüche 2 bis 10, **dadurch gekennzeichnet, dass** das Adapterelement (12a, 12b) mindestens eine, insbesondere genau eine, flache Außenseite (34a, 34b) aufweist.

12. Adaptereinheit (AE) nach Anspruch 11, **dadurch gekennzeichnet, dass** der Befestigungsflansch (30a, 30b) auf der der ebenen Außenseite (34a, 34b) gegenüberliegenden Seite des Adapterelements (12a, 12b) hervorsteht und im vorstehenden Bereich (35) zumindest eine Durchgangsbohrung (15') für eine Befestigungsschraube (15a, 15b) zur Befestigung der Adaptereinheit (AE) an dem Ventil (11) aufweist.

13. Adaptereinheit (AE) nach Anspruch 12, **dadurch gekennzeichnet, dass** die Adaptereinheit (12a, 12b) in ihrem ersten Schenkel (12f) zumindest eine Durchgangsbohrung (15") für eine Befestigungsschraube zur Befestigung der Adaptereinheit (AE) an dem Ventil (11) aufweist.

14. Adaptereinheit (AE) nach Anspruch 11 bis 13, **dadurch gekennzeichnet, dass** die Adapterelemente (12a, 12b) mit ihren flachen Seiten (34a, 34b) aneinander anliegen.

15. Ventil mit einer Adaptereinheit (AE) nach einem der vorhergehenden Ansprüche.
